# EUROPÄISCHE PATENTSCHRIFT

(11) **EP 3 380 756 B1**
(45) Veröffentlichungstag und Bekanntmachung des Hinweises auf die Patenterteilung: **02.09.2020**
(21) Anmeldenummer: 16808916.7
(22) Anmeldetag: 27.10.2016
(51) Int. Cl.: F16H 55/08, B23F 5/08

(54) **VERFAHREN ZUR HERSTELLUNG EINES GETRIEBES MIT EINEM ERSTEN ZAHNRAD UND MIT EINEM ZWEITEN ZAHNRAD**
METHOD OF MANUFACTURE OF A GEARBOX HAVING A FIRST GEARWHEEL AND A SECOND GEARWHEEL
PROCÉDÉ DE FABRICATION D'UNE TRANSMISSION COMPRENANT UNE PREMIÈRE ROUE DENTÉE ET UNE DEUXIÈME ROUE DENTÉE

(30) Priorität: 27.11.2015 DE 102015015224
(43) Veröffentlichungstag der Anmeldung: 03.10.2018
(73) Patentinhaber: SEW-EURODRIVE GmbH & Co. KG, 76646 Bruchsal (DE)
(72) Erfinder: WALKOWIAK, Matthias, 45665 Recklinghausen (DE); KUNERT, Jens, 76646 Bruchsal (DE)
(86) Internationale Anmeldenummer: PCT/EP2016/025128
(87) Internationale Veröffentlichungsnummer: WO 2017/088980

(56) Entgegenhaltungen:
- EP-A1- 2 532 926
- DE-A1- 2 060 959
- DE-A1- 2 512 651
- DE-A1- 19 755 359
- DE-C- 335 791
- US-A- 3 180 172
- US-A- 3 855 874
- US-A- 4 031 770
- US-A- 5 271 289

## Beschreibung

Die Erfindung betrifft ein Verfahren zum Herstellen eines Getriebes mit einem ersten Zahnrad, welches um eine erste Drehachse drehbar ist, und mit einem zweiten Zahnrad, welches um eine zweite Drehachse drehbar ist.

Aus der EP 2 532 926 A1 ist eine exzentrisch zykloide Einrastung von Zahnprofilen mit gekrümmten Zähnen bekannt.

Aus der US 4 031 770 A ist ein Zweiflankenkontakt bei einem Getriebe des Typs W-N bekannt.

Aus der US 3 180 172 A sind konjugierte Zahnprofile bekannt.

Aus der US 5 271 289 A sind Getriebe des Typs W-N mit doppeltem Eingriff bekannt.

Aus der EP 2 532 926 A1 ist eine exzentrisch zykloide Einrastung von Zahnprofilen mit gekrümmten Zähnen bekannt.

Aus der DE 25 12 651 A1 ist als nächstliegender Stand der Technik ein geräuscharmes Zahnradgetriebe bekannt.

Aus der DE 20 60 959 A1 ist ein Zahnradgetriebe besonderer Verzahnungsform bekannt, wobei der Wälzkreis im Eingriffsbereich angeordnet ist.

**Aus der** DE 335 791 C **ist ein Zahnprofil für Zahnräder bekannt.**

Der Erfindung liegt daher die Aufgabe zugrunde, ein Getriebe weiterzubilden, wobei das Getriebebei kompaktem Aufbau möglichst leistungsfähig sein soll.

Erfindungsgemäß wird die Aufgabe bei dem **Verfahren** nach den in Anspruch 1 angegebenen Merkmalen gelöst.

Von Vorteil ist dabei, dass ein hohes Drehmoment übertragbar ist, weil die Flankentragfähigkeit im Vergleich zu einer Evolventenverzahnung gleicher Baugröße hoch ist. Denn aufgrund der verbesserten Krümmungsverhältnisse ergibt sich die höhere Flankentragfähigkeit. Somit ist das Getriebe kompakt aufbaubar und gleichzeitig leistungsfähig, also zur Übertragung hoher Drehmomente verwendbar.

Bei einer vorteilhaften Ausgestaltung ist der aktive Eingriffsbereich der für den Kontakt mit dem anderen Zahnrad, also mit dem im Eingriff stehenden Zahnrad, vorgesehene Bereich der Flanke. Von Vorteil ist dabei, dass ein Profilschrieb mit einer Messmaschine entlang des aktiven Eingriffsbereichs bestimmbar ist. Dabei ist der Profilschrieb vom Fuß bis zum Kopf der Flanke bestimmbar und anhand des Profilschriebs fertigungsbedingte Abweichungen von der idealen Flankenform. Insbesondere ist die Abweichung von der idealen Kreisbogenform bestimmbar. Im Bereich des Fußes und Kopfes sind zwar Korrekturen vorsehbar, die beispielsweise des Eintrittsstoß und/oder den Austrittsstoß verringern, jedoch verändern diese Korrekturen nicht mehr als die Hälfte des Profilschriebs, insbesondere des aktiven Eingriffsbereichs. Somit ist im zentralen zur Drehmomentübertragung wesentlichen Teil der Flanke eine ungestörte Kreisbogenform gewährleistet.

Bei einer vorteilhaften Ausgestaltung ist der Radius des Kreisbogens größer als der laterale Versatz I,
wobei der laterale Versatz I einen nicht verschwindenden Betrag aufweist. Von Vorteil ist dabei, dass der Radius des Kreisbogens sehr groß wählbar ist. Somit ist eine große Flankentragfähigkeit erreichbar.

Bei einer vorteilhaften Ausgestaltung ist der Kreisbogen derart genau gefertigt, dass der Krümmungsradius entlang zumindest von 50% des aktiven Eingriffsbereichs um nicht mehr veränderlich ist, insbesondere schwankt, als 5%, insbesondere vom Mittelwert des Krümmungsradius in diesem Teilbereich von den zumindest 50% des aktiven Eingriffsbereichs. Von Vorteil ist dabei, dass im für die Drehmomentenübertragung wesentlichen Bereich des aktiven Eingriffsbereichs die Kreisbogenform einhaltbar ist.

Bei einer vorteilhaften Ausgestaltung ist der Kreisbogen derart genau gefertigt, dass er einen endlichen Krümmungsradius aufweist, insbesondere also einen nicht verschwindenden Wert aufweist. Von Vorteil ist dabei, dass die Flanke keinen geradlinigen, insbesondere geradflankigen, Verlauf hat, also keinen unendlich großen Krümmungsradius.

Bei einer vorteilhaften Ausgestaltung ist der Krümmungsradius des Kreisbogens größer als ein Viertel der Teilung und/oder als die halbe Zahndicke. Von Vorteil ist dabei, dass eine hohe Flankentragfähigkeit erreichbar ist.

Bei einer vorteilhaften Ausgestaltung ist das Profil der Gegenflanke, insbesondere auf dem zweiten Zahnrad, nach dem Verzahnungsgesetz konstanter Drehwegübertragung transversalkonjugiert bestimmt,
insbesondere so, dass der Einflanken-Wälzsprung und die Einflanken-Wälzabweichung einen vorgegebenen Grenzwert nicht überschreitet, insbesondere wobei diese Einflankenwerte im Bereich der entsprechenden Werte von Evolventen-verzahnten Zahnrädern gleicher Baugröße liegen. Von Vorteil ist dabei, dass ein konvex-konvexes oder sogar ein konvex-konkaves Eingriffsverhältnis realisierbar ist.

**Erfindungsgemäß** werden die Schneidkanten desjenigen Werkzeugs, welches zur Herstellung der Flanken im Wälzverfahren verwendet, S-förmig ausgeführt sind. Von Vorteil ist dabei, dass eine besonders hohe Flankentragfähigkeit erreichbar ist.

**Erfindungsgemäß weist das Zahnrad einen Zahn auf**, dessen zumindest eine Flanke im Querschnitt einen Kreisbogen aufweist,
wobei die Drehachsen in Normalenrichtung zur Querschnittsebene ausgerichtet sind. Von Vorteil ist dabei, dass ein Zahnrad für eine hohe Drehmomentübertragung auf kompaktem Bauraum bereit stellbar ist. Außerdem ist das Zahnrad als Stirnrad ausgeführt. Die Zähne des Zahnrades ragen also in radialer Richtung hervor und sind in Umfangsrichtung regelmäßig voneinander beabstandet. Dabei sind die Zähne jeweils alle gleichartig geformt.

Bei einer vorteilhaften Ausgestaltung ist das Zahnrad schrägverzahnt oder geradverzahnt ist. Von Vorteil ist dabei, dass bei Schrägverzahnung besonders geringe Geräuschemissionen erreichbar sind und bei Geradverzahnung eine einfache Herstellung durch Profilschleifen ausführbar ist.

Die erfindungsgemäße Schrägverzahnung und auch die erfindungsgemäße Geradverzahnung haben beide den Vorteil ein geringeres spezifisches Gleiten aufzuweisen und somit also geringeren Verschleiß im Vergleich zur Evolventenverzahnung gleicher Baugröße.

Die erfindungsgemäße Schrägverzahnung und auch die erfindungsgemäße Geradverzahnung weisen beide jeweils in jeder Querschnittsebene, deren Normale in axialer Richtung ausgerichtet ist, insbesondere also deren Normale parallel zu den Drehachsrichtung des Zahnrads ausgerichtet ist, einen Kreisbogen als Flankenabschnitt des jeweiligen Zahns auf. Die genannte Querschnittsebene ist auch als Stirnschnittebene bezeichenbar.

Bei einer vorteilhaften Ausgestaltung ist das Getriebe derart ausgeführt, dass der Wälzpunkt und die Wälzkreise innerhalb des aktiven Eingriffsbereichs liegen. Von Vorteil ist eine einfache Herstellung, da der von den Zähnen überdeckte Radialabstandsberiech demjenigen von Evolventen-verzahnten Zahnrädern gleicher Baugröße entspricht.

Bei einer vorteilhaften alternativen Ausgestaltung ist das Getriebe derart ausgeführt ist, dass der Wälzpunkt und/oder zumindest ein Wälzkreis außerhalb des aktiven Eingriffsbereichs liegt, wobei die Zahndicke von Kopf bis Fuß des Zahns, insbesondere des ersten Zahnrades, monoton ansteigt, insbesondere wobei also die Zahndicke mit abnehmendem Abstand zur Drehachse des ersten Zahnrades monoton ansteigt, insbesondere in dem von dem Zahn überdeckten, von der Drehachse des ersten Zahnrades aus gemessenen Radialabstandsbereich. Von Vorteil ist dabei, dass hohe Übersetzungen bei Zähnen ohne Unterschnitt erreichbar sind, also in der Zahndicke von Kopf nach Fuß monoton anwachsenden Zähnen.

Die Erfindung wird nun anhand von Abbildungen näher erläutert:
In der Figur 1 sind die beiden Drehzentren (1, 2), also Drehachsen, zweier im Eingriff sich befindenden Zahnräder (40, 41) dargestellt und ein Kreisbogen des im Stirnschnitt quer zur Drehachse geschnittenen ersten Zahnrades.

In der Figur 2 ist der Krümmungsradius in Abhängigkeit vom Kontaktradius für die erfindungsgemäße Kreisbogenverzahnung im Vergleich zu verschiedenen Verzahnungen dargestellt.

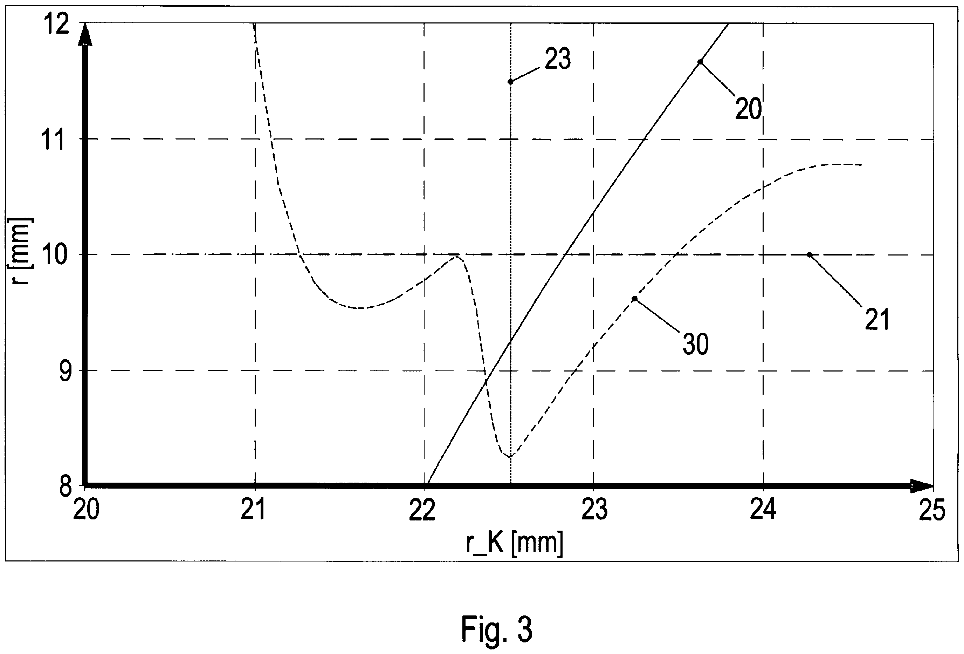

In der Figur 3 ist der Krümmungsradius in Abhängigkeit vom Kontaktradius für die erfindungsgemäße Kreisbogenverzahnung im Vergleich zu verschiedenen Verzahnungen dargestellt, wobei im Vergleich zur Figur 2 der Bereich um die Kennlinie der erfindungsgemäßen Kreisbogenverzahnung vergrößert ausgeführt ist.

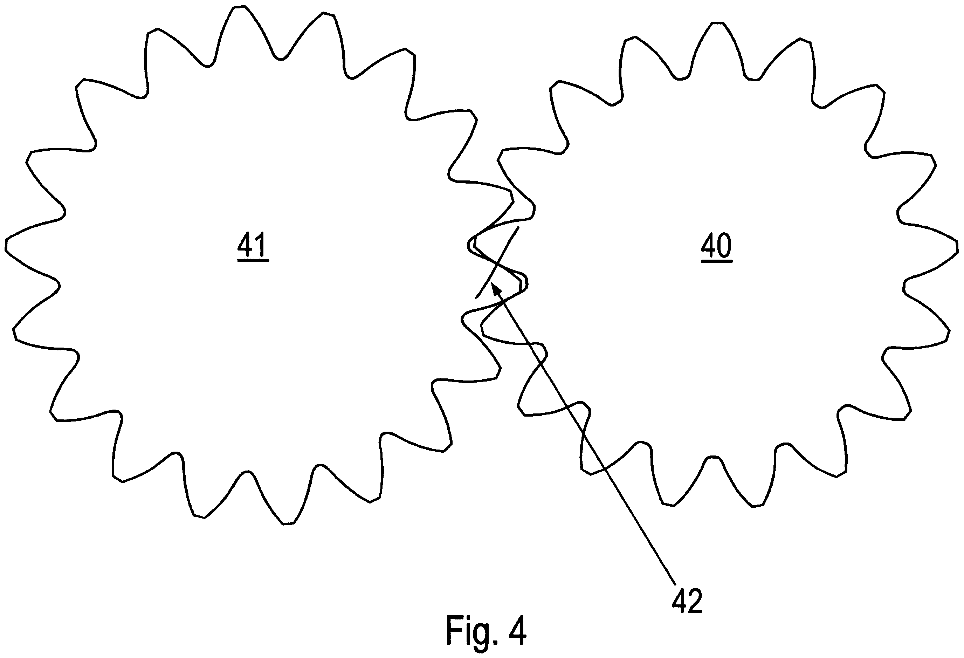

In der Figur 4 sind die beiden im Eingriff sich befindenden Zahnräder, also ein erstes Zahnrad 40 und ein zweites Zahnrad 41 schematisch im Stirnschnitt gezeigt.

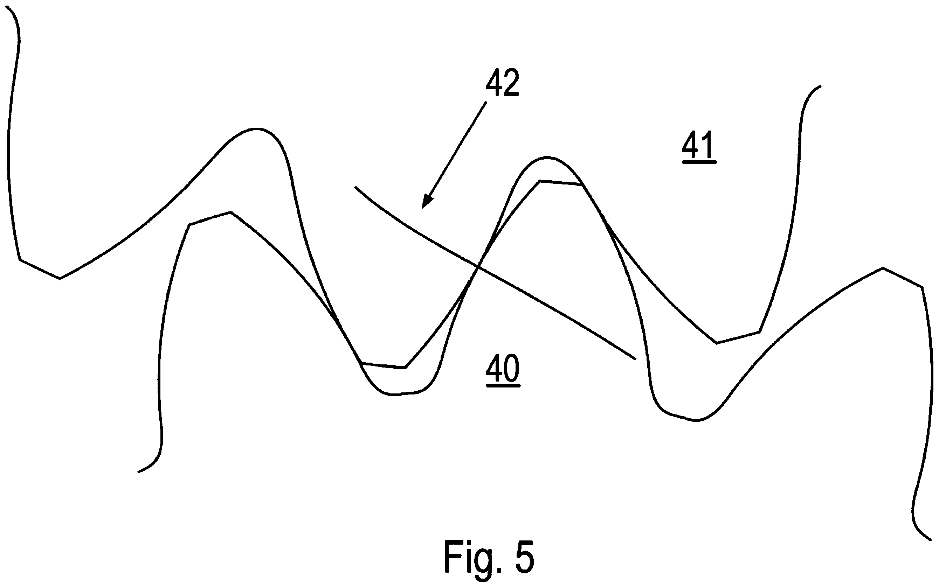

In der Figur 5 ist ein Ausschnitt der Figur 4 vergrößert dargestellt, so dass die rechnerisch bestimmte Eingriffslinie 42 deutlicher erkennbar ist.

Wie in den Figuren dargestellt, weist das erfindungsgemäße Getriebe ein erstes Zahnrad 40 auf, das um ein Drehzentrum 1 drehbar ist, wobei die Drehachse das Drehzentrum 1 umfasst. Ebenso ist ein zweites Zahnrad 41 um eine weitere Drehachse drehbar, die ein zweites Drehzentrum 2 umfasst.

Die beiden Drehachsen sind parallel ausgerichtet und weisen den Abstand a zueinander auf.

Das erste Zahnrad 40 weist an seinem Umfang in Umfangsrichtung regelmäßig voneinander beabstandete gleichartig geformte Zähne auf. Eine oder beide der Zahnflanken des jeweiligen Zahns sind im Querschnitt als Kreisbogen ausgeführt, wobei die Drehachse Normale der zugehörigen Querschnittsebene ist. Die beiden Flanken eines jeweiligen Zahns sind vorzugsweise zueinander spiegelsymmetrisch ausgeführt. Somit ist jeder Zahn konvex.

Der Einfachheit halber wird im Folgenden nur auf eine erste Flanke, nämlich die linke Flanke, Bezug genommen.

Der Mittelpunkt des Kreisbogens liegt nicht auf der Verbindungslinie der beiden Drehzentren, also auch nicht in der die beiden Drehachsen 1 und 2 aufnehmenden Ebene, sondern weist einen Versatz I in dazu senkrechter Richtung, also lateraler Richtung auf. Außerdem weist er einen Versatz e in Verbindungsrichtung der beiden Drehzentren auf, also einen exzentrischen Versatz e.

Der Radius r des Kreisbogens ist entsprechend groß ausgeführt.

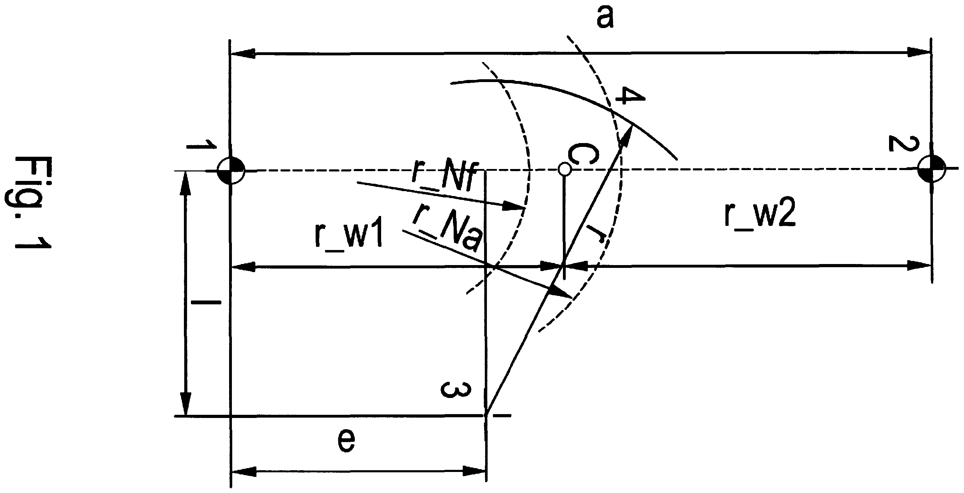

Die Zähne des mit dem ersten Zahnrad 40, also Stirnrad, im Eingriff stehenden, zweiten Zahnrades 41, also Stirnrades, sind nicht abgebildet in Figur 1. Das Profil der im Eingriff stehenden Flanke des zweiten Zahnrades 41, insbesondere also Gegenflanke, wird nach dem Verzahnungsgesetz konstanter Drehwegübertragung transversalkonjugiert bestimmt. Somit überschreitet die Einflanken-Wälzabweichung und der Einflanken-Wälzsprung, insbesondere definiert nach DIN 3960, einen definierten Grenzwert entsprechend der Baugröße des Getriebes, insbesondere definiert nach DIN 3963. Dabei liegen die genannten Verzahnungsfehler im Bereich evolventischer oder anderer transversalkonjugierter Verzahnungen gleicher Baugröße. Abhängig von den Parametern e, I, r, also abhängig von dem Wert des exzentrischen Versatzes e, vom Wert des lateralen Versatzes I und vom Wert des Radius r des Kreisbogens, ist der Zahn jeweils konvex, konkav oder auch gemischt, also im oberen Zahnbereich konvex und im unteren Zahnbereich konkav.

Bei dem erfindungsgemäßen Ausführungsbeispiel ist der Krümmungsradius des Kreisbogens größer als ein Viertel der Teilung und/oder der halben Zahndicke.

Weder am ersten noch am zweiten Zahnrad ist das Profil geradflankig.

Außerdem ist bei der praktischen Ausführung auch wichtig, dass der Krümmungsradius der Flanke des ersten und/oder zweiten Zahnrades (40, 41) über einen weiten Bereich des für den Eingriffsbereich vorgesehenen Flankenbereichs, also aktiven Bereichs, nicht mehr als 5% abweicht von einem Mittelwert über einen hinreichend großen Bereich des aktiven Bereichs, also des für den Kontakt vorgesehenen Eingriffsbereichs, oder über die Hälfte des aktiven Bereichs hinweg.

Der Krümmungsradius muss dabei endlich und nicht verschwindend sein.

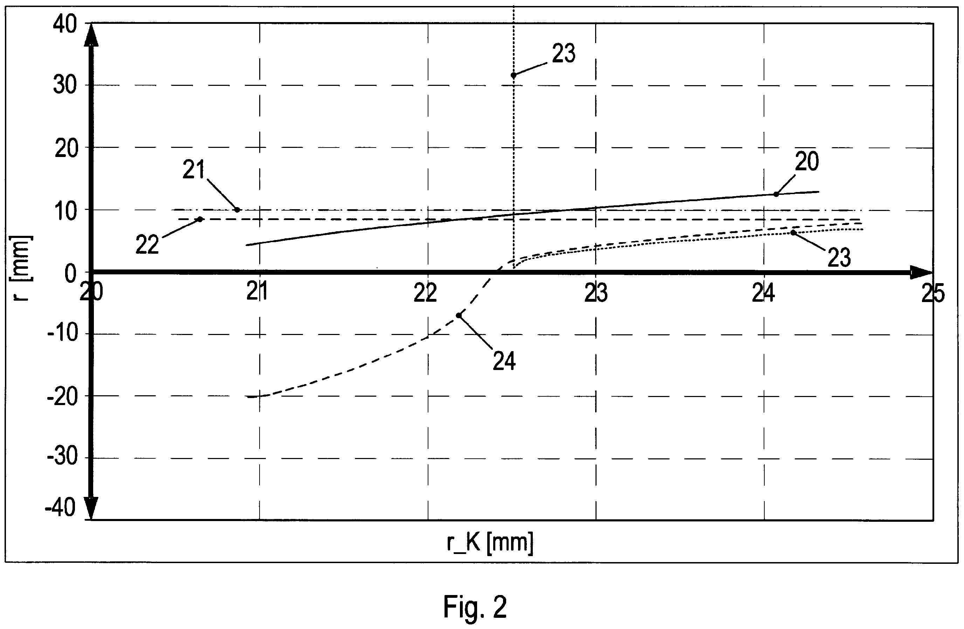

Figur 2 zeigt für verschiedene Verzahnungen die entsprechende Kennlinie, welche den Krümmungsradius dem Kontaktradius zuordnet. Der Kontaktradius ist der Abstand zur Drehachse des ersten Zahnrads. Der aktive Eingriffsbereich reicht vom Fuss-Nutzkreis-Radius r_Nf bis zum Kopf-Nutzkreis-Radius r_Na, wobei der Betriebswälzkreis-Radius r_W1 des ersten Zahnrads innerhalb des aktiven Eingriffsbereichs liegt.

Alternativ ist aber auch das Getriebe derart ausführbar, dass der Wälzpunkt und/oder zumindest ein Wälzkreis außerhalb des aktiven Eingriffsbereichs liegt. Dies ermöglicht hohe Übersetzungen, wobei die Verzahnung keinen Unterschnitt aufweist. Der Zahn ist also jeweils einer hohe Belastung aussetzbar, ohne dass er abreißt. Der Zahndicke von Kopf bis Fuß monoton ansteigt.

Wie in Figur 2 gezeigt, weicht die Kennlinie von anderen Verzahnungen stark ab von der der erfindungsgemäßen Verzahnung zugeordneten Kennlinie (21, 22). Der Krümmungsradius einer Evolventenverzahnung steigt von Fußende bis Kopfende des aktiven Eingriffsbereichs an, wie aus der Kennlinie 20 ersichtlich ist.

Die Kennlinie 21 ist für die erfindungsgemäße Verzahnung bei konvex-konvexer Zahnpaarung vorgesehen und die Kennlinie 22 ist für eine konvex-konkave Zahnpaarung vorgesehen. Die Kennlinie 23 ist für eine Zykloidenverzahnung mit Geradflanke vorgesehen. Die Kennlinie 24 ist für eine Zykloidenverzahnung ohne Geradflanke vorgesehen, wobei die Zahnflanke unterhalb des Wälzkreises als Hypozykloide ausgeführt ist und oberhalb als Epizykloide.

**In einem 5% Band um die erfindungsgemäße Kennlinie 21 herum ist** nur ein kurzer Abschnitt der Zahnflanken anderer Verzahnungen zuordenbar.

Insbesondere ist der Bereich mit 5% Abweichung um die erfindungsgemäß konstante Kennlinie 21 herum von der Kennlinie 20 nur sehr geringfügig.

Auch bei einer Verzahnung, bei welcher die Schneidkante des Werkzeugs für die Herstellung im Wälzverfahren S-förmig ausgeführt ist, ist nur ein kleiner Bereich der Kennlinie 30 in dem genannten Bereich mit 5% Abweichung zur erfindungsgemäß konstanten Kennlinie 21 herum.

Somit ist die erfindungsgemäße Verzahnung auch bei herstellungsbedingten Abweichungen klar unterscheidbar von anderen Verzahnungen.

Die erfindungsgemäße Verzahnung weist eine sehr hohe Flankentragfähigkeit auf, insbesondere höher als die anderen Verzahnungen, wie Evolventenverzahnung, Zykloidenverzahnung, S-gear-Verzahnungen.

Bei einem weiteren erfindungsgemäßen Ausführungsbeispiel ist die erfindungsgemäße Verzahnung nicht als Außenverzahnung, sondern als Innenverzahnung ausgeführt.

### Bezugszeichenliste

1 Drehzentrum, insbesondere Drehachse, des ersten Zahnrads
2 Drehzentrum, insbesondere Drehachse, des zweiten Zahnrads
3 Mittelpunkt der Kreisbogen
4 Kreisbogen
20 Kennlinie der Evolventenverzahnung
21 Kennlinie einer ersten erfindungsgemäßen Verzahnung
22 Kennlinie einer zweiten erfindungsgemäßen Verzahnung
23 Kennlinie einer Zykloidenverzahnung mit Geradflanke
24 Kennlinie einer Zykloidenverzahnung, unterhalb des Wälzkreises die Flanke als Hypozykloide ausgeführt ist und oberhalb als Epizykloide
30 Kennlinie einer S-gear-Verzahnung, wobei die Schneidkante des Werkzeugs einen Krümmungswechsel aufweist
40 erstes Zahnrad
41 zweites Zahnrad
42 rechnerisch bestimmte Eingriffslinie
r Radius des Kreisbogens, Krümmungsradius
e exzentrischer Versatz
I lateraler Versatz
a Achsabstand, insbesondere Abstand der zueinander parallel ausgerichteten Drehachsen 1 und 2 zueinander
r_Nf Fuss-Nutzkreis-Radius
r_Na Kopf-Nutzkreis-Radius
r_W1 Betriebswälzkreis-Radius des ersten Zahnrads
r_W2 Betriebswälzkreis-Radius des zweiten Zahnrads
C Wälzpunkt der beiden Betriebswälzkreise
r_K Kontaktradius

## Patentansprüche

1. **Verfahren zum Herstellen eines Getriebes** mit einem ersten Zahnrad, welches um eine erste Drehachse drehbar ist, und mit einem zweiten Zahnrad, welches um eine zweite Drehachse drehbar ist,
**wobei das erste und das zweite Zahnrad miteinander im Eingriff sind,**
wobei die erste und die zweite Drehachse parallel zueinander ausgerichtet sind und voneinander beabstandet sind,
wobei das erste Zahnrad, mit in Umfangsrichtung regelmäßig voneinander beabstandeten, jeweils gleichartig ausgeführten, Zähnen **ausgeführt wird**,
wobei, im Querschnitt; eine der beiden Flanken des jeweiligen Zahns als Kreisbogen zumindest **in einem** aktiven Eingriffsbereich ausgeführt **wird**, wobei die Drehachsen parallel zu einer Normale der Schnittebene des Querschnitts, sind.
**wobei** der Mittelpunkt desjenigen Kreises, welcher den Kreisbogen umfasst, einen endlichen und nicht verschwindenden Abstand zur ersten und zur zweiten Drehachse aufweist, also einen exzentrischen Versatz (e),
**wobei** der Mittelpunkt des Kreises, welcher den Kreisbogen umfasst, einen endlichen und nicht verschwindenden Abstand zu derjenigen Ebene, welche die erste und die zweite Drehachse umfasst, aufweist, also einen lateralen Versatz (I),
wobei der aktive Eingriffsbereich der für den Kontakt mit dem anderen Zahnrad, also mit dem im Eingriff stehenden Zahnrad, vorgesehene Bereich der Flanke ist,
wobei der Radius des Kreisbogens, größer ist als der laterale Versatz (I),
wobei der laterale Versatz (I) einen nicht verschwindenden Betrag aufweist,
wobei der Krümmungsradius des Kreisbogens größer ist als ein Viertel der Teilung und/oder als eine halbe Zahndicke,
**dadurch gekennzeichnet, dass**
die Schneidkanten desjenigen Werkzeugs, welches zur Herstellung der Flanken im Wälzverfahren verwendet wird, S-förmig ausgeführt sind.

2. Verfahren nach Anspruch 1,
**dadurch gekennzeichnet, dass**
der Kreisbogen derart genau gefertigt ist, dass der Krümmungsradius entlang zumindest von 50% des aktiven Eingriffsbereichs um nicht mehr veränderlich ist,
als 5%, vom Mittelwert des Krümmungsradius in diesem Teilbereich von den zumindest 50% des aktiven Eingriffsbereichs.

3. Verfahren nach einem der vorangegangenen Ansprüche,
**dadurch gekennzeichnet, dass**
der Kreisbogen derart genau gefertigt ist, dass er einen endlichen, **nicht verschwindenden** Krümmungsradius aufweist,

4. Verfahren nach einem der vorangegangenen Ansprüche,
**dadurch gekennzeichnet, dass**
das Profil **einer** Gegenflanke, auf dem zweiten Zahnrad nach dem Verzahnungsgesetz konstanter Drehwegübertragung transversalkonjugiert bestimmt ist,
so, dass der Einflanken-Wälzsprung und die Einflanken-Wälzabweichung einen vorgegebenen Grenzwert nicht überschreitet,

5. Verfahren nach einem der vorangegangenen Ansprüche,
**dadurch gekennzeichnet, dass**
das Getriebe derart ausgeführt ist, dass **ein** Wälzpunkt und die Wälzkreise innerhalb des aktiven Eingriffsbereichs liegen.

6. Verfahren nach einem der Ansprüche 1 bis 4,
**dadurch gekennzeichnet, dass**
das Getriebe derart ausgeführt ist, dass Wälzpunkt und/oder zumindest ein Wälzkreis außerhalb des aktiven Eingriffsbereichs liegt, wobei die Zahndicke von Kopf bis Fuß des Zahns des ersten Zahnrades monoton ansteigt wobei also die Zahndicke mit abnehmendem Abstand zur Drehachse des ersten Zahnrades monoton ansteigt, in dem von dem Zahn überdeckten, von der Drehachse des ersten Zahnrades aus gemessenen Radialabstandsbereich.

7. **Verfahren nach einem der vorangegangenen Ansprüche,**
**dadurch gekennzeichnet, dass**
**das erste und zweite Zahnrad schrägverzahnt ist oder geradverzahnt ist.**

## Claims

1. Method for producing a gear mechanism comprising a first gearwheel, which is rotatable about a first axis of rotation, and a second gearwheel, which is rotatable about a second axis of rotation,
wherein the first and the second gearwheel are in engagement with one another,
wherein the first and the second axis of rotation are oriented parallel to one another and are spaced apart from one another, wherein the first gearwheel is configured with teeth which are each identical and which are regularly spaced apart from one another in a circumferential direction,
wherein, in cross-section, one of the two flanks of the respective tooth is configured as a circular arc at least in an active engagement region,
wherein the axes of rotation are parallel to a normal to the sectional plane of the cross-section,
wherein the centre point of the circle comprising the circular arc is at a finite and non-vanishing distance from the first and the second axis of rotation, that is to say an eccentric offset (e),
wherein the centre point of the circle comprising the circular arc is at a finite and non-vanishing distance from the plane that includes the first and the second axis of rotation, that is to say a lateral offset (I),
wherein the active engagement region is the region of the flank that is provided for contact with the other gearwheel, that is to say with the gearwheel engaging therewith,
wherein the radius of the circular arc is larger than the lateral offset (I),
wherein the lateral offset (I) has a non-vanishing value, wherein the radius of curvature of the circular arc is larger than one quarter of the pitch and/or than one half of the tooth thickness,
**characterized in that**
the cutting edges of the tool that is used to produce the flanks in the rolling process are S-shaped.

2. Method according to claim 1,
**characterized in that**
the circular arc is precisely fashioned such that the radius of curvature along at least 50% of the active engagement region is variable by no more than 5% from the mean value of the radius of curvature in this sub-region of the at least 50% of the active engagement region.

3. Method according to any one of the preceding claims, **characterized in that**
the circular arc is precisely fashioned such that it has a finite, non-vanishing radius of curvature.

4. Method according to any one of the preceding claims, **characterized in that**
the profile of a mating flank on the second gearwheel is determined as a transverse conjugate according to the law of gearing of constant rotational travel transmission,
such that the single-flank working error and the single-flank working deviation does not exceed a predefined limit value.

5. Method according to any one of the preceding claims, **characterized in that**
the gear mechanism is configured such that a pitch point and pitch circles are located within an active engagement region.

6. Method according to any one of claims 1 to 4, **characterized in that**
the gear mechanism is configured such that pitch point and/or at least one pitch circle is located outside of the active engagement region, wherein the tooth thickness increases monotonically from the tip to the base of the tooth of the first gearwheel, that is to say wherein the tooth thickness increases monotonically as the distance from the axis of rotation of the first gearwheel decreases, in the radial distance range covered by the tooth and measured from the axis of rotation of the first gearwheel.

7. Method according to any one of the preceding claims, **characterized in that**
the first and second gearwheel is helical-toothed or straight-toothed.

## Revendications

1. Procédé de fabrication d'une transmission comprenant une première roue dentée, apte à tourner autour d'un premier axe de rotation, et une seconde roue dentée apte à tourner autour d'un second axe de rotation,
lesdites première et seconde roues dentées étant en prise mutuelle,
lesdits premier et second axes de rotation étant orientés parallèlement l'un à l'autre et étant distants l'un de l'autre,
la première roue dentée étant pourvue de dents espacées régulièrement les unes des autres dans le sens périphérique et présentant, à chaque fois, une réalisation de même type, sachant que l'un des deux flancs de la dent considérée revêt la forme d'un arc de cercle, en coupe transversale, au moins dans une zone opérante de venue en prise,
les axes de rotation étant parallèles à une perpendiculaire au plan de la coupe transversale, sachant que le centre de la circonférence incluant l'arc de cercle présente une distance finie et non fuyante par rapport aux premier et second axes de rotation, c'est-à-dire un décalage excentré (e),
sachant que le centre de la circonférence incluant l'arc de cercle présente une distance finie et non fuyante par rapport au plan contenant lesdits premier et second axes de rotation, c'est-à-dire un décalage latéral (1),
la zone opérante de venue en prise étant la région du flanc prévue pour le contact avec l'autre roue dentée, c'est-à-dire avec la roue dentée en prise,
le rayon de l'arc de cercle étant plus grand que le décalage latéral (1),
lequel décalage latéral (1) présente une valeur non évanescente,
sachant que le rayon de courbure dudit arc de cercle est supérieur à un quart du pas et/ou à une demi-épaisseur de dent,
**caractérisé par le fait que**
les arêtes de coupe de l'outil, utilisé pour la production des flancs suivant le procédé de taillage par génération, sont réalisées avec configuration en S.

2. Procédé selon la revendication 1,
**caractérisé par le fait que**
l'arc de cercle est produit avec une précision telle que, le long d'au moins 50 % de la zone opérante de venue en prise, le rayon de courbure ne fluctue pas plus de 5 % de la valeur moyenne dudit rayon de courbure dans cette région partielle représentant lesdits 50 %, au minimum, de ladite zone opérante de venue en prise.

3. Procédé selon l'une des revendications précédentes,
**caractérisé par le fait que**
l'arc de cercle est produit avec une précision telle qu'il présente un rayon de courbure fini, non évanescent.

4. Procédé selon l'une des revendications précédentes,
**caractérisé par le fait que**
le profil d'un flanc complémentaire, sur la seconde roue dentée, est déterminé avec conjonction transversale d'après la loi d'engrènement à transmission constante de courses rotatoires,
de telle sorte que le saut d'engrènement sur un flanc et l'écart d'engrènement sur un flanc n'excèdent pas une valeur limite préétablie.

5. Procédé selon l'une des revendications précédentes,
**caractérisé par le fait que**
la transmission est réalisée de façon telle qu'un point primitif et des cercles de roulement se situent à l'intérieur de la zone opérante de venue en prise.

6. Procédé selon l'une des revendications 1 à 4,
**caractérisé par le fait que**
la transmission est réalisée de façon telle qu'un point primitif et/ou au moins un cercle de roulement se situe(nt) à l'extérieur de la zone opérante de venue en prise, sachant que l'épaisseur de la dent de la première roue dentée croît de façon monotone du sommet jusqu'au pied de ladite dent, ladite épaisseur de la dent croissant, par conséquent, de façon monotone au fur et à mesure que la distance décroît, par rapport à l'axe de rotation de ladite première roue dentée, dans la plage de distances radiales couverte par ladite dent et mesurée à partir dudit axe de rotation de la première roue dentée.

7. Procédé selon l'une des revendications précédentes,
**caractérisé par le fait que**
les première et seconde roues dentées sont munies de dentures obliques ou de dentures droites.
